# EUROPEAN PATENT APPLICATION

(11) **EP 1 783 613 A1**
(43) Date of publication of application: **09.05.2007**
(21) Application number: 05765804.9
(22) Date of filing: 13.07.2005
(51) Int. Cl.: G06F 12/00, H04N 5/76

(54) **INFORMATION GENERATION DEVICE AND INFORMATION GENERATION PROGRAM**

(30) Priority: 21.07.2004 JP 2004213028
(71) Applicant: KONICA MINOLTA HOLDINGS, INC., Tokyo 100-0005 (JP)
(72) Inventor: TAKEDA, Mayumi, Konica Minolta Techn. Ctr., Inc., Hachioji-shi, Tokyo 1928505 (JP)
(74) Representative: Roberts, Mark Peter
(86) International application number: PCT/JP2005/012888
(87) International publication number: WO 2006/009023

(57) **Abstract**

In a CPU 11 within a PC 10 as an information generating apparatus are provided, a seed information acquiring section that acquires as seed information, from an source file, at least one of a data string within said file and the file size, a code generating section that generates a code based on the seed information acquired using said seed information acquiring section, and a file name generating section that generates a file name including the code generated by said code generating section and assigns it to said source file.

## Description

### TECHNICAL FIELD

The present invention relates to information generating apparatuses and information generating programs that generate information.

### BACKGROUND OF ART

Conventionally, in equipment such as PC's (Personal Computers), etc., carrying out management of a plurality of image files photographed using a DSC (Digital Still Camera), etc., has been implemented. For example, electronic album programs have been implemented for managing the photographed image files so that they can be browsed. At that time, in order to prevent the file names of image files from becoming the same, the processing is carried out of generating and assigning unique file names.

Further, in an electronic camera, a configuration of generating a file name that includes the processed data of the date and time of recording the photographed image data in the recording medium has been thought of (see, for example, Patent Document 1). In addition, a configuration has been thought of in which unique file names, which are not duplicate as long as the recording is done in the same photographing apparatus, are generated by generating numbers in the ascending or descending order and assigning it to the file name (see, for example, Patent Document 2).

Patent Document 1: Japanese Patent Publication No. 3524934.

Patent Document 2: Japanese Unexamined Patent Application Publication No. Hei 10-177646.

However, in the conventional configuration of generating a file name containing the processed data of the date and time of recording in the recording medium, or in the configuration of assigning numbers in the ascending or descending order to the file name, the uniqueness of the file name was not sufficient and the possibility of generating the same file names was not low.

Although it is almost impossible to manage by making unique all the file names, directory names, or the recording media identification information of the recording media recording the files and directories in the world, there is a demand for further increasing the uniqueness of the file names, directory names, and the recording media identification information.

### DISCLOSURE OF THE INVENTION

The issue to be addressed by the present invention is to increase sufficiently the uniqueness of file names, directory names, or recording media identification information.

In order to solve the above problem, the information generating apparatus of the present invention has a seed information acquiring section that acquires, from the source file, as the seed information at least one of the data strings in said source file and the file size, a code generating section that generates a code based on the seed information acquired by said seed information acquiring section, and a file name generating section that generates a file name including the code generated by said code generating section and assigns it to said source file.

Further, in said information generating apparatus, there is the feature that said seed information acquiring section acquires the time information as the seed information, and said file name generating section sets at the beginning of said file name a code corresponding to said time information.

In addition, as another configuration of the present invention, the information generating apparatus has the feature that it comprises a seed information acquiring section that acquires, from at least one source file stored in a directory, as the seed information at least one of the data strings in said source file, the file size, and the number of files, a code generating section that generates a code based on the seed information acquired by said seed information acquiring section, and a directory name generating section that generates a directory name including the code generated by said code generating section and assigns it to said directory.

Further, in said information generating apparatus, there is the feature that said seed information acquiring section acquires the time information as the seed information, and said directory name generating section sets at the beginning of said directory name a code corresponding to said time information.

In addition, as another configuration of the present invention, the information generating apparatus has the feature that it is provided with a seed information acquiring section that acquires, from at least one source file recorded in a recording medium, as the seed information at least one of the data strings in said source file, the file size, and the number of files, a code generating section that generates a code based on the seed information acquired by said seed information acquiring section, and a recording medium identification information generating section that generates a recording medium identification information including the code generated by said code generating section and assigns it to said recording medium.

Further, in said information generating apparatus, there is the feature that said seed information acquiring section acquires the time information as the seed information, and said recording medium identification information generating section sets at the beginning of said recording medium identification information a code corresponding to said time information.

Further, in said information generating apparatus, there is the feature that it is provided with a processing section that processes said acquired seed information or said generated code.

Further, in said information generating apparatus, there is the feature that said processing is at least one of conversion of the number system, discarding the part with low uniqueness, rearrangement of the order, and addition of permutation.

Further, in said information generating apparatus, there is the feature that said seed information acquiring section acquires a plurality of seed information, and said code generating section generates the code by combining said acquired plurality of seed information.

Further, in said information generating apparatus; there is the feature that said code generating section generates the code without processing the part, among said acquired time information, that is used by the user for verification.

Further, the present invention makes a computer have an information generating program for realizing a seed information acquiring function that acquires, from the source file, at least one of the data strings within said source file and the file size as the seed information, a code generating function that generates a code based on the seed information acquired by said seed information acquiring function, and a file name generating function that generates a file name including the code generated by said code generating function and assigns it to said source file.

Further, in said information generating program, there is the feature that said seed information acquiring function acquires the time information as the seed information, and said file name generating function sets at the beginning of said file name a code corresponding to said time information.

Further, the present invention makes a computer have an information generating program for realizing a seed information acquiring function that acquires, from at least one source file stored in a directory, as the seed information at least one of the data strings in said source file, the file size, and the number of files, a code generating function that generates a code based on the seed information acquired by said seed information acquiring function, and a directory name generating function that generates a directory name including the code generated by said code generating function and assigns it to said directory.

Further, in said information generating program, there is the feature that said seed information acquiring function acquires the time information as the seed information, and said directory name generating function sets at the beginning of said directory name a code corresponding to said time information.

Further, the present invention makes a computer have an information generating program for realizing a seed information acquiring function that acquires, from at least one source file recorded in a recording medium, at least one of the data strings in said source file, the file size, and the number of files as the seed information, a code generating function that generates a code based on the seed information acquired by said seed information acquiring function, and a recording medium identification information generating function that generates a recording medium identification information including the code generated by said code generating function and assigns it to said recording medium.

Further, in said information generating program, there is the feature that said seed information acquiring function acquires the time information as the seed information, and said recording medium identification information generating function sets at the beginning of said recording medium identification information a code corresponding to said time information.

Further, in said information generating program, there is the feature of realizing, in said computer, a processing function that processes said acquired seed information or said generated code.

Further, in said information generating program, there is the feature that said processing is at least one of conversion of the number system, discarding the part with low uniqueness, rearrangement of the order, and addition of permutation.

Further, in said information generating program, there is the feature that said seed information acquiring function acquires a plurality of seed information, and said code generating function generates the code by combining said acquired plurality of seed information.

Further, in said information generating program, there is the feature that said code generating function generates the code without processing the part, among said acquired time information, that is used by the user for verification.

### BRIEF DESCRIPTION OF THE DRAWINGS

Figure 1 is a diagram showing the configuration of an information recording system 1α of a preferred embodiment of the present invention.
Figure 2 is a diagram showing the internal configuration of the PC 10.
Figure 3 is a diagram showing the directory structure of the electronic album disk 30.
Figure 4 is a flow chart showing the code assignment processing.
Figure 5 is a flow chart showing the first file name generating processing.
Figure 6 is a flow chart showing the first data string acquiring processing within the first file name generating processing.
Figure 7 shows a histogram of the number of image files with respect to the digital value of the data string.
Figure 8 is a flow chart showing the second data string acquiring processing within the first file name generating processing.
Figure 9 is a flow chart showing the first directory name generating processing.
Figure 10 is a flow chart showing the second directory name generating processing.
Figure 11 is a flow chart showing the second file name generating processing.
Figure 12 shows a histogram of the number of image files with respect to the file size.
Figure 13 shows a histogram of the number of image files with respect to the lower two digits of the file size.
Figure 14 is a flow chart showing the third directory name generating processing.
Figure 15 is a flow chart showing the fourth directory name generating processing.
Figure 16 is a flow chart showing the fifth directory name generating processing.
Figure 17 shows a histogram of the number of image files with respect to the number of files within the directory.
Figure 18 is a flow chart showing the third file name generating processing.

### PREFERRED EMBODIMENT OF THE INVENTION

In the following, some preferred embodiments of the present invention and some examples of their modification are explained in sequence while referring to the attached drawings. However, the scope of the present invention shall not be construed to be limited to the examples shown here.

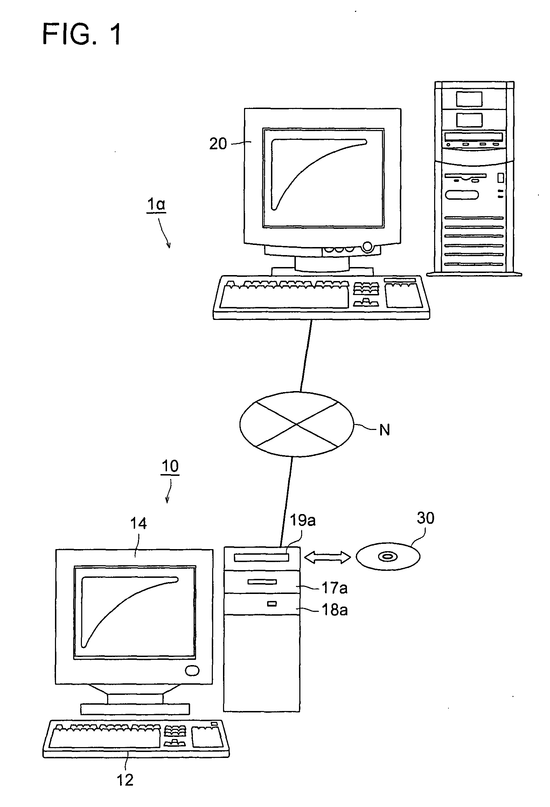

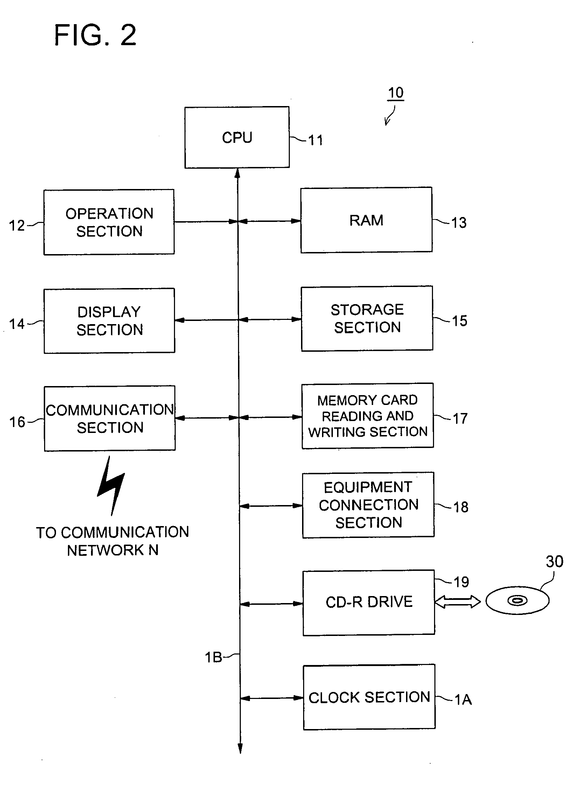

To begin with, the features of the apparatus according to the present preferred embodiment are explained while referring to Figure 1 and Figure 2. Figure 1 shows the configuration of an information recording system 1α according to the present preferred embodiment. Figure 2 shows the internal configuration of the PC 10.

As is shown in Figure 1, the information recording system 1α according to the present preferred embodiment is configured to have a PC 10 and a server 20, and each of these apparatuses are connected by a communication network N. The PC 10 inputs image data, etc., from a digital camera or a memory card, etc., of a digital camera, and records the electronic album disk 30 of the CD-R as the recording medium.

Although the communication network N is taken as a LAN (Local Area Network), it can also be a WAN (Wide Area Network), and the configuration can be one that includes a telephone line network, an ISDN (Integrated Services Digital Network) line network, a broadband communication line network, leased lines, mobile communication network, communication satellite circuits, CATV (Community Antenna Television) lines, optical communication lines, wireless communication circuits, and internet service providers connected to these.

As is shown in Figure 2, the PC 10 is configured to have a CPU 11, an operation section 12, a RAM 13, a display section 14, an HDD (Hard Disk Drive) 15, a communication section 16, a memory card reading and writing section 17, an equipment connection section 18, a CD-R drive 19, and a clock section 1A, and each of these are connected by a bus 1B.

The CPU 11 centrally controls the different sections within the PC 10. The CPU 11 appropriately expands in the work area of the RAM 13 the specified program from among the different types of programs stored in the HDD 15, and executes various types of controls by working together with the programs in the RAM 13. The control means of the CPU 11, etc., that carries out the control in this configuration function as the seed information acquiring section, a code generating section, a file name generating section, a directory name generating section, and a recording medium generating section.

The operation section 12 includes a keyboard provided with various types of keys, a pointing device, etc., such as a mouse, etc., and outputs the key input signal or the position input signal input by the operator to the CPU 11. The RAM 13 has a work area for storing temporarily various types of data and various types of programs, etc. The display section 14 is configured using an LCD (Liquid Crystal Display), etc., and carries out screen display in accordance with the display signal from the CPU 11.

The HDD 15 is provided with a recording medium (not shown in the figure) based on magnetism, and, under instruction from the CPU 11, stores various types of programs and various types of data in a readable and writable manner. The communication section 16 carries out transmission and reception of information with equipment such as the server 20, etc., present on the communication network N.

The memory card reading and writing section 17 is provided with a slot 17a for loading a memory card, and, under instruction from the CPU 11, reads out information stored in the memory card that is loaded, or writes information to it. A memory card is loaded directly in the slot 17a, or a memory card is mounted on a body and that body is loaded in the slot 17a. For example, a memory card that is mounted in a digital camera not shown in the figure, and which is stored the image data (image file) photographed by that digital camera, is loaded in the memory card reading and writing section 17. As the memory card, it is possible to use, for example, a Smart Media, a Compact Flash (registered trademark), a Memory Stick (registered trademark) and SD (Secure Digital) memory card, a multimedia card, an xD picture card, etc.

The equipment connection section 18 is provided with a connector 18a in which it is possible to insert the pins of a cable, etc., and, under instruction from the CPU 11, carries out transmission and reception of information with the equipment connected to the other end of that cable, etc. The equipment connection section 18, for example, using a connection method such as USB (Universal Serial Bus), etc., connects with a digital camera not shown in the figure, or a mobile telephone unit with photographing functions, via a cable, and receives image data stored in that digital camera, etc. In addition, the equipment connected can also be an external HDD, a drive of a disk such as a CD-R, a memory card slot, etc. In addition, it is also possible to connect a memory key directly to the slot, and to read out the information stored in the memory key loaded in that slot, or to write information in it.

The CD-R drive 19 is provided with a tray 19a in which it is possible to set a CD-R disk, and, under instruction from the CPU 11, reads out information stored in the disk set in the tray 19a or writes information to it. It is possible to set an electronic album disk 30 in the CD-R drive 19. The clock section 1A acquires the time information indicating the current date and time and outputs it to the CPU 11.

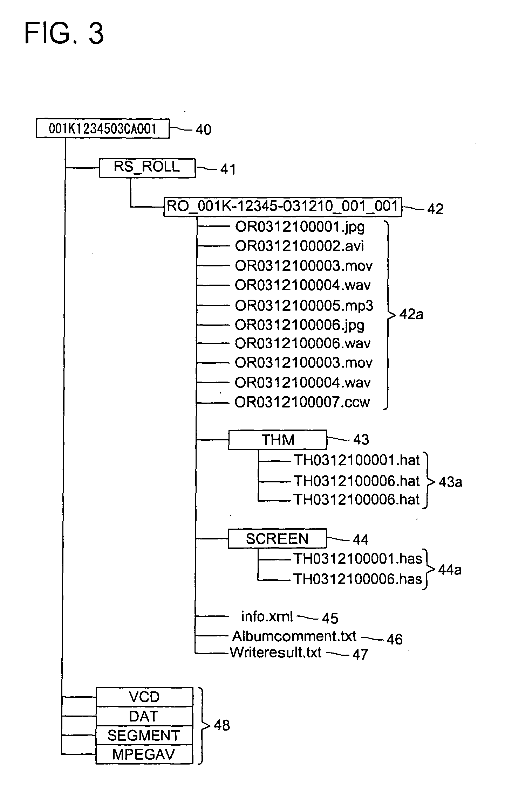

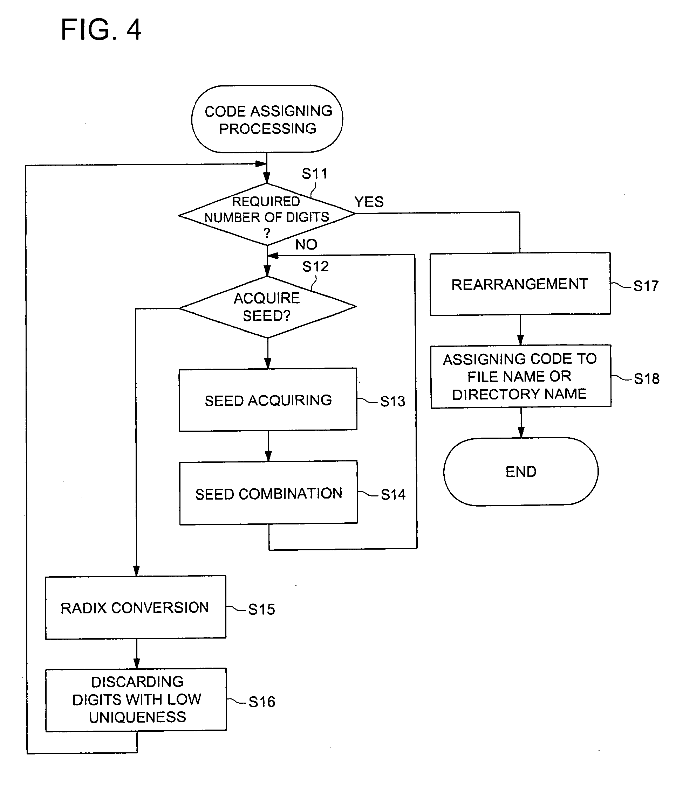

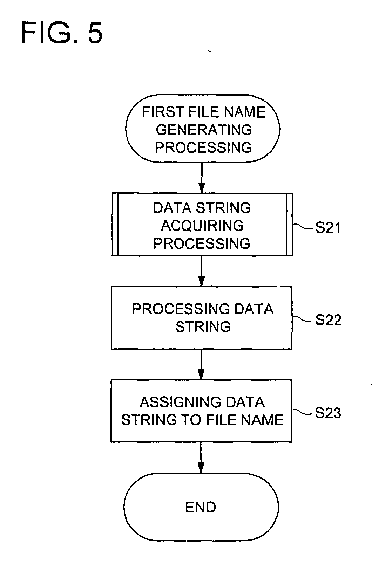

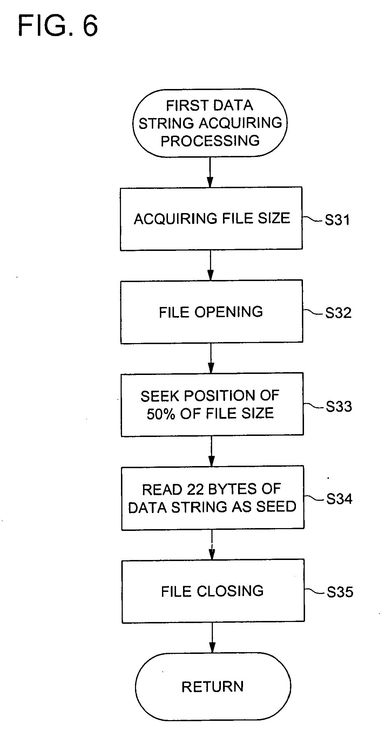

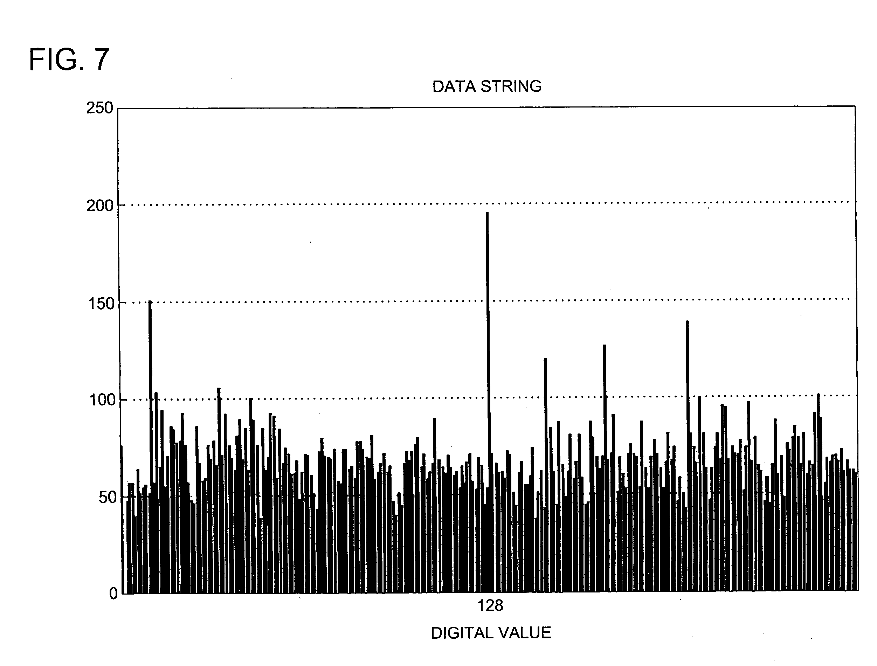

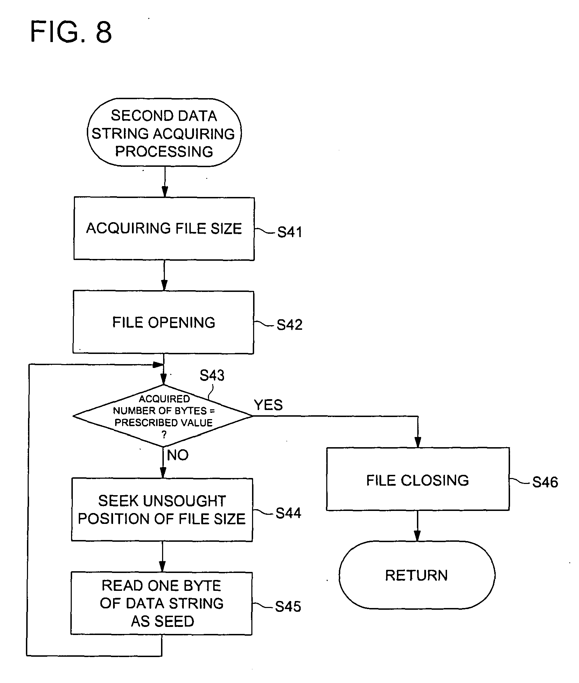

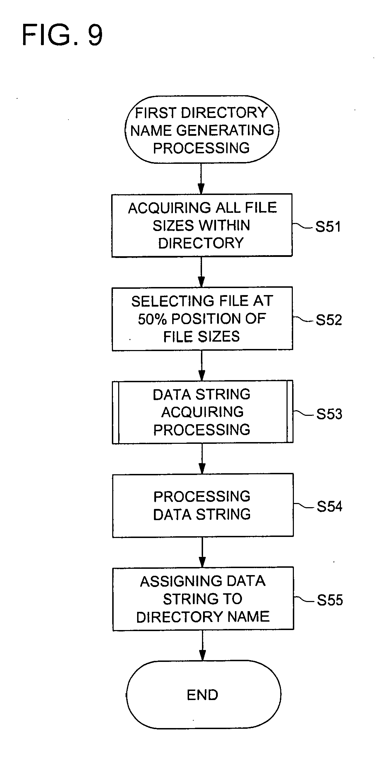

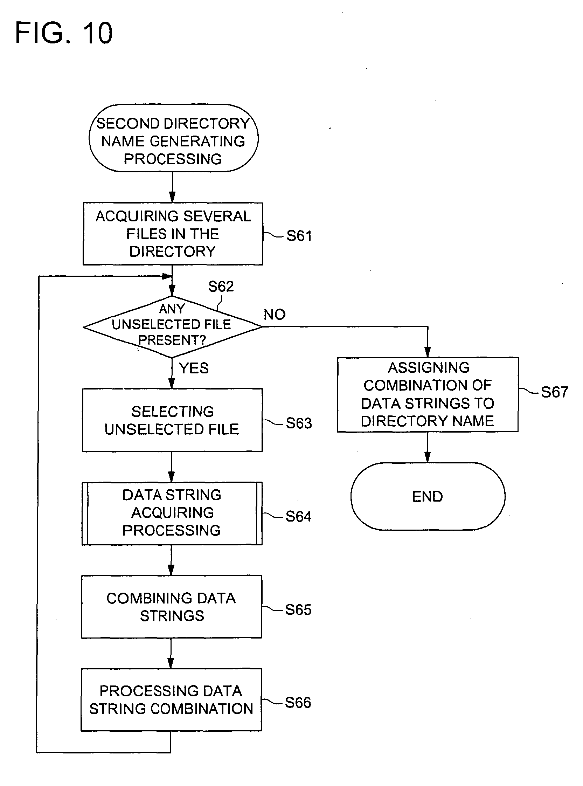

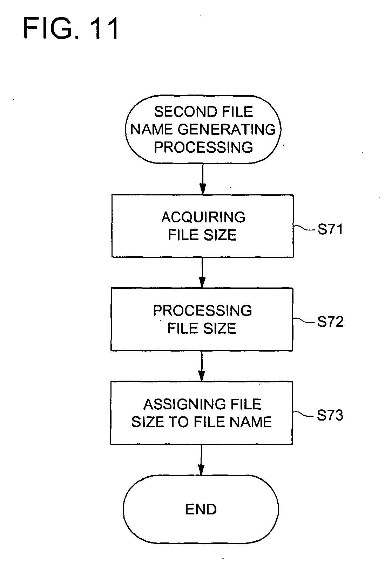

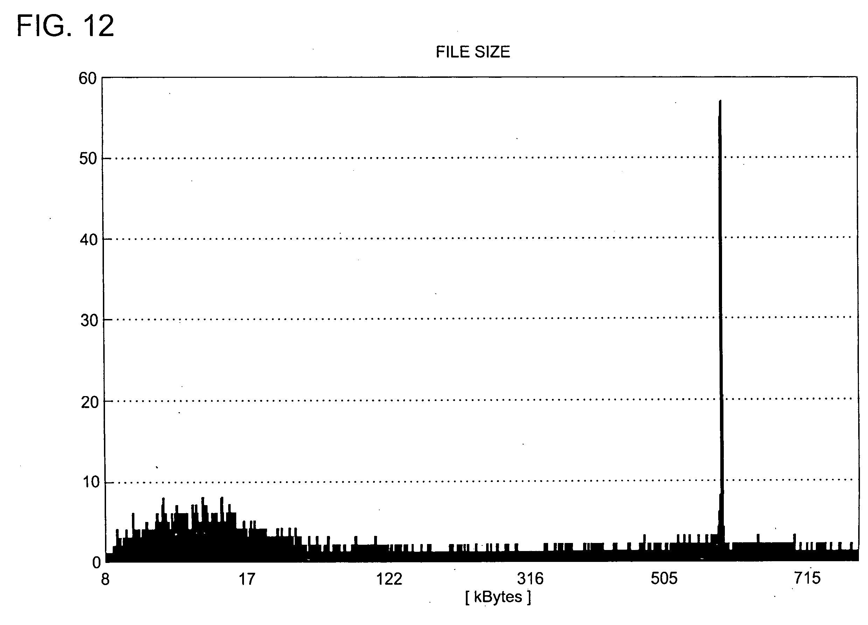

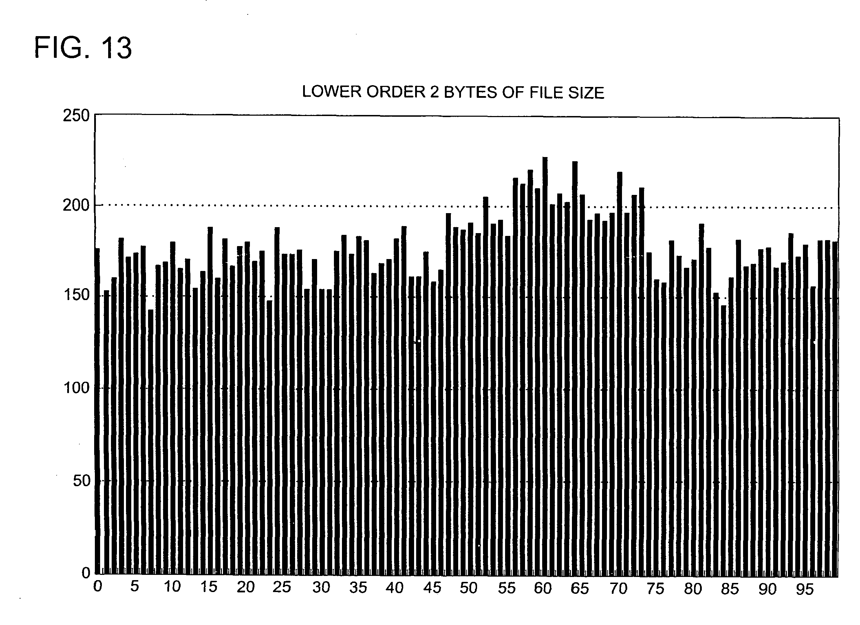

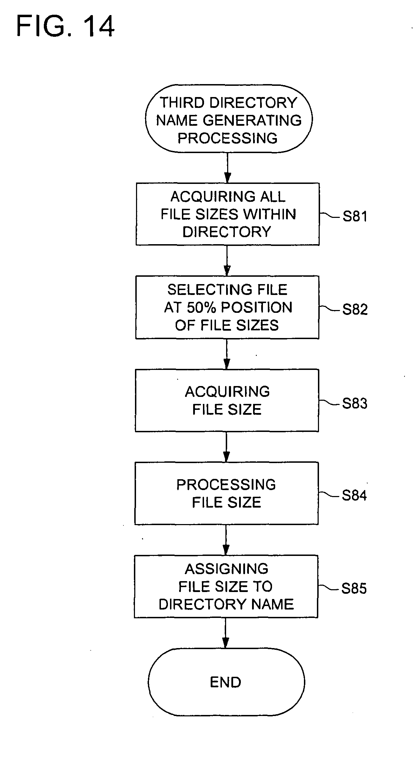

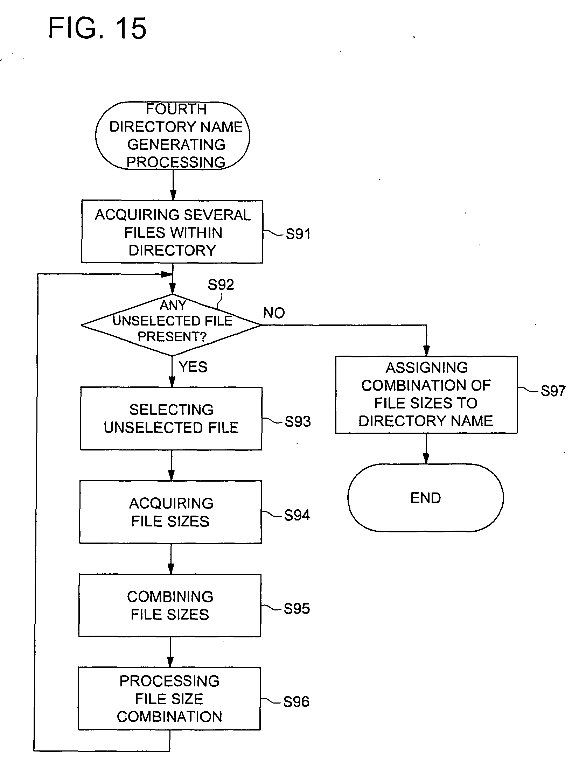

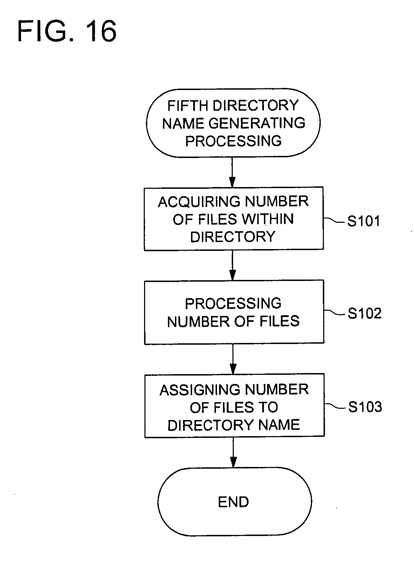

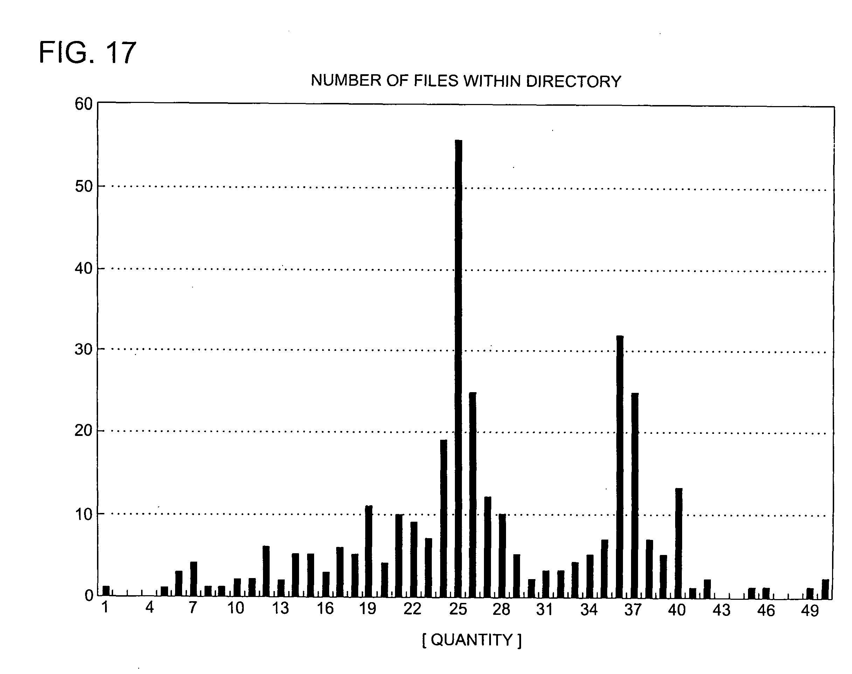

Next, referring to Figures 3 to Figure 17, the operations in the PC 10 are explained below. In Figure 3 is shown the directory structure of the electronic album disk 30. In Figure 4 is shown the code assignment processing. In Figure 5 is shown the first file name generating processing. In Figure 6 is shown the first data string acquiring processing within the first file name generating processing. In Figure 7 is shown a histogram of the number of image files with respect to the digital value of the data strings. In Figure 8 is shown the second data string acquiring processing within the first file name generating processing. In Figure 9 is shown the first directory name generating processing. In Figure 10 is shown the second directory name generating processing. In Figure 11 is shown the second file name generating processing. In Figure 12 is shown a histogram of the number of image files with respect to the file size. In Figure 13 is shown a histogram of the number of image files with respect to the lower two digits of the file size. In Figure 14 is shown the third directory name generating processing. In Figure 15 is shown the fourth directory name generating processing. In Figure 16 is shown the fifth directory name generating processing. In Figure 17 is shown a histogram of the number of image files with respect to the number of files within the directory.

Firstly, a description is given here about the electronic album disk 30. In general, in order to manage a plurality of image files (image data), the image files photographed by the user using a digital camera, etc., were loaded into a PC, an electronic album was prepared using which it is possible to browse freely a plurality of images, and this was recorded and stored in a fixed recording medium such as the HDD, etc., of that PC or in a portable recording medium such as a CD-R, etc. In particular, if the recording is done in a portable recording medium, that recording medium can be distributed to other persons. However, for a novice user of a PC, it is difficult to read in and input the image data from a digital camera, and although it is desirable to use a program for preparing electronic albums, it was cumbersome to get that program ready. In addition, even regarding a recording medium that was distributed, it is desirable to use a program with which the receiving person can easily reproduce the image data.

Therefore, a service of selling electronic album disks as blank recording media in which only the default data such as an image reproducing program, etc., has been recorded beforehand has been thought of. An image recording program is recorded in that blank recording medium so that it is possible to select image files such as the still images or moving images prepared by the user. In addition to image files, it is also possible to record music files (music data). The image reproducing program has the function of displaying and reproducing still images or moving image files, and the function, etc., of reproducing music files along with the reproduction of these image files.

As the default data stored in the blank electronic album disk 30, apart from the above, it is also possible to include a image reproduction settings program for setting the image reproduction method such as a slide show in which image files are reproduced successively at a prescribed time interval, a print order settings program for setting for ordering the printing of recorded image files on printing paper, an image processing program for carrying out processings such as color correction, density correction, hue correction, image rotation, trimming, etc., on the image data, and at least one of image files and music files, and etc., as samples.

Next, in the PC 10, the recording data for an electronic album is recorded in the blank electronic album disk 30 set in the CD-R drive 19. The recording data includes at least image files of still and moving images, and can also include music files for outputting at the same time as reproducing the images. For example, it is also possible to receive and input the recording data from the server 20 via the communication network N and the communication section 16. Also, it is possible to read out and input, from the memory card reading and writing section 17, the recording data from a memory card in which recording data has been stored. In addition, it is also possible, from the equipment connection section 18, to read out and input the recording data from equipment such as a digital camera, etc., in which image files have been photographed and stored. Further, it is also possible, from the CR-R drive 19, to read out and input the recording data from a disk such as a CD-R, etc., in which the recording data has been stored.

Further, in the blank electronic album disk 30, a directory (folder) structure for storing image files, etc., is created, and the recording is done by storing the image files, etc., inside that directory. The electronic album disk 30 after recording, for example, has a directory structure as shown in Figure 3. However, in Figure 3, the state is shown after recording image files and music files in a blank electronic album disk 30. Further, in Figure 3, default data has been omitted.

In the electronic album disk 30, not only that default data is recorded beforehand, but also, in the directory (folder) 40 for identifying the electronic album disk, a roll separating directory 41 has been stored, and below that, a directory 42 of the source image files for the PC 10 has been provided. The directory name of the directory 40 includes the disk ID for identifying the electronic album disk at the time of writing the information of the image files, etc.

In the directory 42 are stored the data 42a of the image files and music files of the source, a directory 43 of thumbnails as the reduced size image files of those source image files, a directory 44 of screen nails, information data 45, comment data 46, and recording conditions information 47. As the source image files are used, for example, files of the formats such as JPEG, BMP, TIFF, GIF, etc., as the image files of still images, or files of the formats AVI, MPEG1, MPEG2, MPEG4, WMV, etc., as the image files of moving images. Further, for the music files are used files of the formats such as WAV, MP3, etc. The file names of each image data and music data include the date and time of preparing the electronic album (the date and time of writing the image data), the serial number, etc.

In the directory 43 is stored the image files 43a of the thumbnails, and in the directory 44 are stored the image files 44a of the screen nails. A screen nail is an image of a resolution that can be displayed with the full size of the display of a PC apparatus, for example, SVGA (Super Video Graphics Array) or XGA (extended Graphics Array), etc. In addition, in the example shown in Figure 3, for the image files of thumbnails and screen nails, file extensions that can identify thumbnail or screen nail have been assigned.

The information data 45 is data of various types of setting information related to the electronic album. The comment data 46 is the comment data related to the album, and of the user who recorded the electronic album.

The recording conditions information 47, for example, includes the model name of the CD-R drive 19, the software name and its version of the driver software of the CD-R drive 19, the software name and its version of the software used for preparing the electronic album, the data recording speed, presence or absence of verification at the time of recording (check of whether the recording was done normally), date and time of recording, disk ID, total data volume, number of data (files), etc.

Further, within the directory 40, it is also possible to record the video image data 48 as the video data for video equipment, for example, a directory (VCD) for storing files that associate image data as the data for Video-CD format, etc., a directory (DAT) for storing various types of data, a directory (SEGMENT) for storing the image data displayed on the TV screen, a directory (MPEGAV) for storing moving image data generated based on the still image data, etc. Normally, image files with the file names as those shown in Figure 4, and the directories with the directory names are recorded in an electronic album disk 30.

However, there are cases when the sources of acquiring the image files within the recording data are many (photographing equipment), and at the time of inputting the different recording data in the PC 10, even if the file names of the image files in the recording data are different, at the time of recording the image files in a blank electronic album disk 30, there is the likelihood of image files being recorded with the same file name. Because of this, before recording image files in the electronic album disk 30, using the processing described below, the source file name is renamed to a file name with a high uniqueness. Next, the image files of the renamed file names are recorded in the blank electronic album disk 30.

Further, when a directory has been configured in the source of acquiring image files, the recording data can be acquired as the entire source directory. In this case, there is the likelihood that a directory with the same directory name will be recorded. Even in this case, using the processing described below, it is possible to rename the source directory name to a directory name with a high uniqueness. Next, the image files in that directory are recorded in the blank electronic album disk 30.

Here, referring to Figure 4, the code assigning processing is explained of generating mutually unique codes (character strings, numeral lists) and assigning them to file names or directory names. For example, when a recording instruction of some prescribed image files is made via the operation section 12, and the file names or the directory names of those files are generated (renamed), in the PC 10, the code assigning processing is carried out by the working together of the code assigning program, that is read out appropriately from the HDD 15 and is expanded in the RAM 13, and the CPU 11. This procedure of starting execution is the same for all the processed described later.

To begin with, a judgment is made as to whether or not a code was acquired with the number of digits necessary for increasing the uniqueness (Step S11). In case a code with the required number of digits has not been acquired (NO in Step S11), then a judgment is made as to whether or not a seed is to be acquired (Step S12). When a seed is to be acquired (YES in Step S12), a certain single seed is acquired (Step S13). A seed is the information used for generating a unique code. In the present preferred embodiment, when the target of assigning a code is (the file name of) an image file, as the seed information, at least the data string within the image file, and the file size are used. When the target of assigning a code is (the directory name of) a directory, as the seed information, at least the data string within the image file, the file size of the image file within the directory, and the number of image files within the directory are used. As other seeds, there are, for example, the time information, permutation in the ascending or descending order, profile information of the creator (name, address, date of birth, etc.,), the manufacturing number recorded in the recording medium such as an electronic album disk 30, a recording medium identification information (disk ID) for identifying the recording medium such as an electronic album disk 30, any optional file selection information, selection information of the above data string, extraction information of a valid data, seed selection information, the selection information of encoding the above permutations, etc., pseudo random number, etc.

As time information are used the photographing time information included in the Exif (Exchangeable Image file Format) information, etc., of the image file, the current time information counted by the clock section 1A (the time information at the time of recording the image files in the electronic album disk 30), etc.

As the method of generating the pseudo random number, it is desirable to select a method that has high uniformity, large period, and a short computation time. Some typical methods of generating pseudo random numbers are, in the order of high uniformity, (1) Mersenne Twister, (2) M-Sequence, (3) linear congruential method, and (4) the middle-square method. Their respective computation times are of the same order, and since the linear congruential method may output the same list of numerals even when a different random number seed (the information used for generating the pseudo random number. Here, in order to distinguish it from the seed for generating a code, it is termed as the random number seed.) is input. Further, the middle-square method has the drawback that it can only be used for taking even number of digits. Therefore, it is desirable to use the Mersenne Twister and M-Sequence methods.

Further, the acquired seed is combined with the seeds that have already been obtained (Step S14), and the operation proceeds to Step S12. When the acquired seed is of only one type, no combining is made. In addition, combining means, for example, the sum (addition) or multiplication of the character strings of the codes.

When no new seed is to be acquired (NO in Step S12), the radix of the code obtained from the acquired seeds is converted (Step S15). Next, in the code after radix conversion, the digits with low uniqueness are discarded (Step S16), and the operation proceeds to Step S11. For example, if it is the date and time information of recording, the digits corresponding only to the year, month, date, hour, and minute can be the digits having a low uniqueness and are likely to be duplicated.

When a code with the necessary number of digits has been acquired (YES in Step S11), the digits of the acquired code are rearranged (Step S17). Next, the rearranged code is assigned to the file name of the image file or to the directory name of the directory which is the target of renaming (Step S17), and the code assigning processing is ended.

Although in the above, an example of code assigning processing is given, it is not necessary to restrict to this code assigning processing. For example, as the processing of the seed (code), apart from radix conversion, discarding digits of low uniqueness, and digit rearrangement, it is possible to include pseudo random number generation using the seed (code), taking the remainder after dividing the seed by any arbitrary number, etc. In addition, in the example of Figure 1, although the processing was done after combining the seeds, it is also possible to combine the seeds after they are processed.

Further, after executing the code assigning processing, the file with the generated unique file name, or the directory (structure) with the generated unique directory name are recorded in the electronic album disk 30.

In the following, as a concrete example of the code assigning processing, the processing of using the data string in the image file, the file size of the image file within the directory, or the number of files of the image files within the directory, as the seed is explained below in sequence.

### (Data string of image file)

Referring to Figures 5 to Figure 10, the processing, executed in the PC 10, of generating the file name or the directory name using a digital data string in the renaming target image file as the seed is explained here. To begin with, referring to Figure 5 and Figure 6, the first file name generating processing of generating a unique file name using a data string in the image file is explained here.

As is shown in Figure 5, to begin with, the data string acquisition processing is carried out (Step S21). Here, referring to Figure 6, the first data string acquiring processing is explained as an example of data string acquiring processing. Firstly, the properties of the image file are referred to, and the file size of that image file is obtained (Step S31). Next, that image file is opened (Step S32). Next, in the opened image file, a seek operation of the position of 50% of the file size obtained in Step S31 is made (Step S33). In other words, the position of 50% is sought from the beginning in the digital data of the image file. Next, from the sought position of that image file, two bytes of data string are read out as the seed (Step S34). Next, that image file is closed (Step S35), and the processing of the first data string acquiring processing is ended.

Returning to Figure 5, the acquired data string is processed (Step S22). The processing of the data string is, for example, conversion of the radix of the data string, or discarding digits with low uniqueness, rearrangement, etc. Next, a file name including the processed data is generated, and is assigned to the renaming target image file (Step S23), and the first file name generating processing is ended. The character string that is included in the source file name, either in the whole or in part, may or may not be retained.

For example, when the two bytes "101010010111" from the 50% position of the source file is acquired, converted into a hexadecimal number, and the data string "A97B" is obtained, this is assigned to the source file name "0001. jpg", and the new file name "0001A97B.jpg" is generated.

However, the seek position or the length of data string need not be restricted to those given in this example. Also, regarding the seek position, it is desirable to avoid the beginning and end of the image file as it is likely that some common data is recorded at those positions.

Further, in Figure 7 is shown an example of the histogram of the number of image files with respect to the digital value of the data string, when the seek position is taken as 50% of the file size, and one byte of data string is acquired. In Figure 7, as samples, the 358 directories before renaming registered in the electronic album, and the 17924 image files in the JPEG and DCF formats stored in those directories are being used. Further, as images of the image files in the samples are included ordinary photographs (negative digitized images, images photographed using a digital still camera) and ID card photographs photographed using a video camera. These samples are being used in a similar manner in the histograms of Figure 12, Figure 13, and Figure 17 to be described later.

As is shown in Figure 7, the digital value of the data string of the image file shows a peak at 128, etc., but other than that, since they are distributed uniformly, the uniqueness is high. When n bytes are acquired (n: any natural number), it is possible to acquire data of 256ⁿ combinations, and since the number of bytes that can be acquired is almost the same as the file size, it can be said to be almost infinite.

Further, by discarding digits with low uniqueness, if the number of bytes in the data string is made small, it is not only possible to prevent extreme reduction in the uniqueness, but also the file name becomes easy to see and the management becomes easy, and also the storage volume can be saved.

The time taken for acquiring the data string is longer than the time taken for acquiring other seeds by the amount necessary for opening the image file. For one image file, the time taken for acquiring one byte of the data string is about 25% of the time taken for copying the image file, and on an average 50 image files are stored in one directory. Therefore, the time taken for acquiring a data string for one image file within a directory about 0.5% of the entire time taken for preparing a directory including copies of the image files and hence it can be said that there is almost no effect.

Next, referring to Figure 8, the second data string acquiring processing is explained as an example of data string acquiring processing. The steps S41, S42, and S46 of the second data string acquiring processing are similar, in sequence, to the steps S31, S32, and S35 of Figure 6. After the image file is opened in Step S42, a judgment is made as to whether or not the number of bytes of the acquired data string is equal to a prescribed value (the desired acquired number of bytes) set beforehand (Step S43). If the number of bytes acquired is smaller than the prescribed value (NO in Step S43), a position in the unsought percentage of the file size acquired in Step S41 is sought (Step S44). For example, an unsought position of 50%, etc., from the beginning of the digital data of the image file is sought. Next, from the sought position of that image file, one byte of data string is read out as the seed (Step S45), and the operation proceeds to Step S43. When the number of bytes acquired is equal to the prescribed value (YES in Step S43), the operation proceeds to Step S46.

Next, referring to Figure 9, the first directory name generating processing of generating a unique directory name using a data string of the image file is explained. To begin with, the properties of all the image files within the renaming target directory are referred to, and each of the file sizes are acquired (Step S51). Next, when the file sizes of each of the image files within the directory are arranged in an ascending order, an image file that is at a sequence closest to 50% is selected (Step S52). However, it is not necessary to restrict to 50%, but any other prescribed percentage can be used.

Next, for the selected image file, a data string acquiring processing similar to that in Step S21 of Figure 5 is carried out (Step S53). Step S54 is similar to Step S22 in Figure 5. Next, a directory name including the processed data string is generated, and is assigned to the renaming target directory (Step S55), and the first directory name generating processing is ended.

In the first directory name generating processing, in the selection of one image file, although one at a prescribed percentage in the sequence of file sizes was selected, it is not necessary to restrict to this. It is also possible to have a configuration in which an image file at a prescribed percentage in the sequence of file names is selected.

Next, referring to Figure 10, the second directory name generating processing is explained. To begin with, among all the image files within the renaming target directory, a prescribed plural number of image files are selected and acquired (Step S61). For example, among all the image files with the renaming target directory, the prescribed plural number of image files are selected at the prescribed sequence positions (for example, at sequence positions corresponding to prescribed percentages (for example, 30%, 50%, 70%, etc.,) of the number of files) in the order of file names, order of file sizes, etc. Further, it is also possible to have a configuration in which these prescribed percentages, or the number of selected image files is computed by generating a pseudo random number using a random number seed such as the time information, etc.

Next, a judgment is made as to whether or not an unselected image file is present among the acquired plural number of image files (Step S62). When some unselected image files are present (YES in Step S62), one unselected image file is selected (Step S63).

Next, for the selected image files, a data string acquiring processing similar to that in Step S21 of Figure 5 is carried out (Step S64). Next, the acquired data string and the data strings that have already been processed are combined (Step S65) in a manner similar to that in Step S14 of Figure 4. Next, a processing is done on the combined data string (Step S66) in a manner similar to that in Step S22 of Figure 5, and the processing proceeds to Step S62. When there is no unselected image file (NO in Step S62), a directory name including the combination of the processed data strings is generated and assigned to the renaming target directory (Step S67), and the second directory name generating processing is ended.

### (File size)

Referring to Figures 11 to Figure 15, the processing, executed in the PC 10, of generating the file name or the directory name using the file size of a renaming target image file as the seed is explained here. To begin with, referring to Figures 11 to Figure 13, the second file name generating processing of generating a unique file name using the file size of an image file is explained here.

As is shown in Figure 11, to begin with, the property of the renaming target image file is referred to, and the file size of that image file is acquired (Step S71). Next, for the acquired file size, a processing similar to that in Step S22 of Figure 5 is carried out (Step S72). The processing includes that of using the lower 1 to 4 digits of the files size of the image file to be described later. Next, a file name including the processed file size is generated and is assigned to the renaming target image file (Step S73), and the second file name generating processing is ended.

The file size of the image file is highly likely to become one-sided, when compression is done with a fixed length of when photographing and digitizing is done using the same equipment. In Figure 12, a histogram is shown of the number of image files with respect to the file size of the image files of digitizing negatives with the same equipment, JPEG compressed image files, or image file of JPEG compressed ID card photos photographed using the same video camera. In the example of Figure 12, there is a peak in the neighborhood of 510 kilo bytes. This peak is almost completely due to the image files of old negatives digitized by a film scanner. In addition, the image files concentrated in the neighborhood of 15 kilo bytes are mostly of the more than 7000 ID photos. In this manner, in spite of the range being large from 4 digits to 7 digits in decimal notation, it is clear that the probability of occurrence is not uniform.

However, if processing is done such as using the lower 1 to 4 digits of the file size of the image file, or using the remainder after dividing the file size by an arbitrary number, while the number of combinations decreases the probability of occurrence comes close to being uniform. For example, in Figure 13, in the histogram of number of image files with respect to the lower two digits of the file size, the probability of occurrence is almost uniform. In this manner, when using n digits (n: any natural number) in decimal notation of the file size, it is possible to acquire 10ⁿ combinations of the code.

Next, referring to Figure 14, the third directory name generating processing of generating a unique directory name using the file size of an image file is explained. The steps S81 and S82 of the third directory name generating processing are similar to the steps S51 and S52 in Figure 9. Next, the property of the image file selected in Step S82 is referred to and the file size is acquired (Step S83). Step S84 is similar to Step S72 in Figure 11. Next, a directory name including the file size processed in Step S84 is generated and is assigned to the renaming target directory (Step S73), and the third directory name generating processing is ended.

Next, referring to Figure 15, the fourth directory name generating processing is explained. The steps S91, S92, and S93 of the fourth directory name generating processing are, in sequence, similar to the steps S61, S62, and S63 in Figure 10. Next, for the image file selected in Step S93, the file size is acquired (Step S94) in a manner similar to that in Step S83 of Figure 14. Next, the acquired file size and the file sizes that have already been processed are combined in a manner similar to that in Step S14 of Figure 4 (Step S95). Next, processing is done for the combined file size in a manner similar to Step S72 in Figure 11 (Step S96), and the processing proceeds to Step S92. When there is no unselected image file (NO in Step S92), a directory name including the combination of the processed file is generated and is assigned to the renaming target directory (Step S97), and the fourth directory name generating processing is ended.

### (Number of files)

Referring to Figures 16 and Figure 17, the processing, executed in the PC 10, of generating the directory name using the number files of the image files within the renaming target directory as the seed is explained here. Referring to Figures 16 and Figure 17, the fifth directory name generating processing of generating a unique directory name using the number files of the image files within the renaming target directory is explained here.

As is shown in Figure 16, to begin with, the number of files of all the files within the renaming target directory is acquired (Step S101). Next, next, a processing similar to that in S22 of Figure 5 is carried out on the acquired number of files (Step S102). Next, a file name including the processed number of files is generated and assigned to the renaming target image file (Step S103), and the second file name generating processing is ended.

The number of files within a directory is acquired within a relatively small time interval. In addition, in Figure 17, a histogram is shown of the number of directories with respect to the number of files within the directory. In this example, although the number of files within a directory was from 1 to 688, among these 1 to 50 are taken out as the samples. In this histogram, there are peaks in the neighborhood of 24 and 36 which correspond to one lot for a film roll. However, similar to the film size, if the lower order digits are used, although the number of combinations decreases, the probability of occurrence becomes closer to being uniform.

Here, as is shown in the examples of Figure 7, Figure 12, and Figure 17, the countermeasure is explained collectively for the cases of the peak occurring (a bias occurring in the probability of occurrence) in the histogram of each of the seeds.

As a first countermeasure, when a value having a high probability of duplicating as the information of a seed has been acquired, the method is to generate the code while avoiding that value. A value having a high probability of duplicating is a value with a high occurrence in each of the histograms. In the example of Figure 7, these are the digital values 10, 12, 34, 45, 128, 148, 168, 197, 201, and 242 of the data string. In the example of Figure 12, these are the file sizes of 510639 to 510673. In the example of Figure 17, these are the number of files of 25 and 36. To begin with, the values with a high probability of duplicating are registered in a blacklist. Next, at the time of acquiring the seed information, the acquisition is repeated while changing the method of acquiring until a value that is not present in the black list is obtained. Or else, when a value in the blacklist has been acquired, it is changed into a value that is not in the blacklist. Or else, when a value in the blacklist is acquired, the acquired value is converted using information obtained form another information source. Or else, when a value in the blacklist is acquired, it is also possible to remove a part of the acquired value (it is desirable that this part is one that is not unique, such as, for example, the higher order digits part).

As a second countermeasure, the method is to acquire the value as the information of the seed by removing the part with a high probability of duplicating. For example, when acquiring a data string in an image file, as has been explained above, the value is acquired while avoiding near the beginning and end of the image file.

As a third countermeasure, the method is to acquire the value as the information of the seed from the part with a low probability of duplicating. For example, when acquiring, as the seed information, the file size (or a data string) of an image file, it is highly probable that similar images are present within the same directory. Even in this case, it is desirable to combine the time information (particularly the milliseconds) that has a low probability of duplicating with the file size (or a data string). Or else, it is desirable to process the file size (or a data string) using this time information. Further, in cases in which batting occurs unavoidably, such as when it is not possible to acquire the time information in units of a millisecond, etc., it is also possible to have a configuration in which permutation is added (the value of the increment can be fixed or can be random) for each image file.

As a fourth countermeasure, when there is information that cannot be obtained as a seed information, the method is to acquire some other information and generating the code by replacing the information that could not be acquired with this information. For example, when combining the file size (or a data string) of an image file with the time information, if the time information cannot be acquired in units of a millisecond, a data string, (or the file size) or their processed value is acquired, as another information, and combined.

As a fifth countermeasure, the method is to generate the code by removing the part with a high probability of duplicating from the information acquired as the information of the seed. For example, when combining the file size (or a data string) of an image file with the time information, the time information is acquired up to the units of minutes, seconds, and milliseconds. It is also possible to replace the year, month, and date parts of the time information by the above other information.

As a sixth countermeasure, when the information of the seed is acquired from a copied image file, the method is to process the acquired information of the seed. For example, the file size (or a data string) of the copied image file is acquired, and the processing is done by adding a permutation information to that information.

As above, according to the present preferred embodiment, it is possible to increase sufficiently the uniqueness of the file name since a unique code is generated from at least one among a data string within the source image file and the file size as the seed, and a file name including that code is generated and assigned.

Further, according to the present preferred embodiment, it is possible to increase sufficiently the uniqueness of the directory name since a unique code is generated from at least one among a data string within at least one source image file within the directory, the file size, and the number of files as the seed, and a directory name including that code is generated and assigned.

Further, as the processing of the acquired seed, it is possible to reduce the volume of information of the seed by carrying out conversion of the radix of the seed and to discard the part with low uniqueness, and to reduce the volume of information of the file name or the directory name. In addition, as the processing of the acquired seed, it is possible to carry out rearrange the digits of the seed, or adding a permutation to the seed thereby increasing the uniqueness of the code, and to increase sufficiently the uniqueness of the file name of the directory name.

Further, when generating the code by combining a plurality of seeds that have been acquired, compared to the case of using a single seed, it is possible to further increase the uniqueness of the file name or of the directory name.

### (Modified Example)

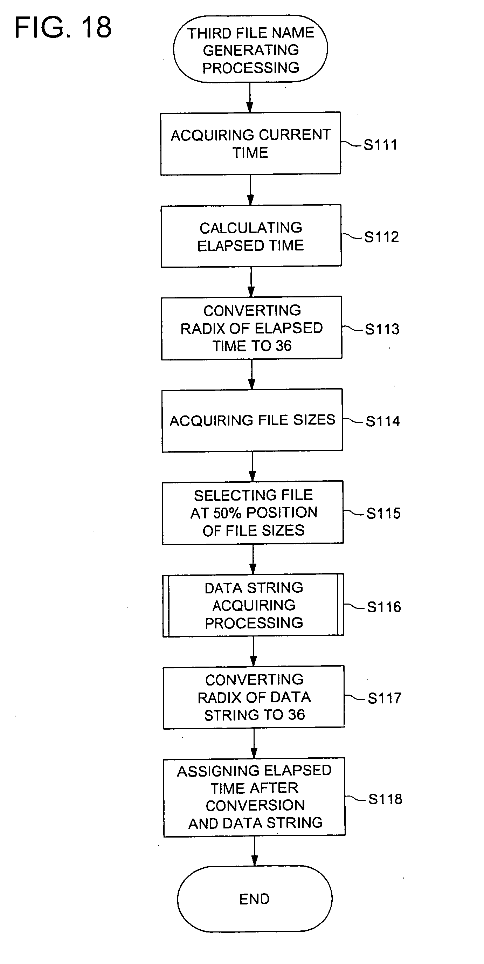

Referring to Figure 18, a modified example of the above preferred embodiment is explained here. In Figure 18, a third file name generating processing is explained. Since the equipment configuration of the present modified example is similar to that of the above preferred embodiment, its explanation will be omitted here.

Referring to Figure 18, as the operation of the PC 10 in the present modified example, the third file name generating processing executed in the PC 10 is explained here. The third file name generating processing is the processing of generating a code by combining the time information and a data string within the image file, and generating a file name of the image file including that code.

To begin with, the current time information is acquired from the clock section 1A (Step S111). Next, the time elapsed from AM 0 hours, 0 minutes, and 0.00 seconds of the year, month, and date of the acquired time information up to the current time information is converted in units of 1/100 seconds (Step S112). Next, the converted elapsed time is converted into a number with a radix of 36 (Step S113). For example, if the 16 digit YYYYMMDDhhmmssss (Y: year, M: month, D: date, h: hours, m: minutes, s: milliseconds) time information of "2004070718452466" was acquired, in Step S112, as the elapsed time, the value 18*60*60*100+45*60*100+2466= "752466" was obtained, and is converted in Step S113 to the value "40q8i".

The steps S114 and S115 are, sequentially, identical with the steps S71 and S72 of Figure 11. Step S116 is similar to Step S21 of Figure 5. Next, the data string acquired in Step S116 is converted to a number with a radix of 36 (Step S117). Next, the elapsed time after conversion is assigned to the higher order five digits, and the lower order part of the data string after conversion is, sequentially, assigned to the lower order three digits of the code, and a file name containing that code is generated (Step S118), and the third file name generating processing is ended.

Further, if 16 digits are taken for the time information acquired in Step S111 in order to make it unique, it is possible to leave as such without processing the digits of the year, month, and date (the upper 8 digits) so that the user can grasp that information by looking at it, and the digits below them (the lower 8 digits) can be processed. In this case, the maximum value of the eight digits to be processed is 24*60*60*60*100 = 8640000, and when converted into a number with a radix of 36, since log₃₆ (8640000) k ≈ 4.457, a maximum of 5 digits are required for converting the lower order eight digits of the time information to a base of 36. In other words, (8 - 5) = 3 digits will be left, and these three digits can be used for some other seed. For example, it is possible to assign a data string, etc., of the image file for these three digits.

Because the time information is measured not merely in terms of the year, month, date, hours, minutes, and seconds, but also measured up to millisecond units, the uniqueness gets enhanced. For example, if up to 10⁻ⁿ (n: any natural number) seconds can be obtained, it is possible to obtain data of 8400*10⁻ⁿ combinations. The time period of acquiring the file name or the directory name can be biased, for example, because it is not done in the early morning hours, but the probability of occurrence comes close to uniformity if measures are taken such as acquiring the time information in GMT (Greenwich Mean Time: Greenwich standard time (Universal Time of Coordinated)), etc. However, even if GMT is used, in the neighborhood, there is the possibility of the time information being duplicated, and also there is a high probability of exchange of image files and directories. Therefore, it is desirable to apply the countermeasure when the probability of occurrence becomes one-sided, as explained in the above preferred embodiment. In addition, although it is possible that there is a bias in the time at which the same person creates image files and directories, since it is possible to acquire up to 10⁻³ in the programming languages of C and C++ (10⁻² in a UNIX (registered trademark) system), it is considered that the likelihood of duplication is low.

According to the present modified example, since, using a data string of an image file and the time information, a code including the time information is further processed and set at the beginning of the file name, it is not only possible to further increase the uniqueness of the file name using the time information, but also it is possible to sort the file names easily in the sequence of the processed time information, and the user can confirm the file name easily by looking at it.

Further, if the year, month, and date part of the time information is not processed, which is desirable because the user can verify it, and the code is generated and assigned to the file name, the user can easily verify the year, month, and date part of the file name by merely looking at it.

Further, in the present modified example, when generating a file name, it is possible to have configuration in which, as the seed, the file size and the time information are acquired, combined, and the code is generated. In addition, in the present modified example, it is also possible to generate a directory name, and at that time, it is possible to have a configuration in which, as the seed, at least one among a data string of an image file within the directory, the file size, and the number of files is combined with the time information, and the code is generated.

In addition, in the above preferred embodiment and modified example, although the configuration is one in which, in the electronic album disk 30, at least the default data is recorded, and image files (and music files) can be recorded, in addition, it is also possible that these image files (and music files) are recorded after converting into data for AV equipment such as the VCD format, etc.

Further, in the above preferred embodiment and modified example, although the configuration is one in which an electronic album disk 30 of the CD-R method was used as the recording medium for recording the image data, etc., it is not necessary to restrict to this. For example, as the recording medium for recording the image data, etc., it is also possible to use disks such as CD-RW, DVD-R/RW, DVD-R, DVD-R/+R, DVD-RW/+RW, DVD-RAM, etc. In addition, as the recording medium for recording image data, etc., it is also possible to use next generation large capacity information storage media such as Blu-ray Disc, HD (High Definition)-DVD, etc.

Further, as the recording medium for storing image data, etc., it is also possible to use flexible disks, memory cards (Smart Media, Compact Flash (registered trademark), Memory Stick (registered trademark), SD (Secure Digital) memory cards, multimedia cards, xD Picture Cards, etc.), portable HDD, memory key, etc.

Further, as an information recording apparatus that records image data, etc., in a recording medium, although a configuration using a PC 10 was explained, it is not necessary to restrict to this. As the information recording apparatus that records image data, etc., it is also possible to have a configuration of using a shop terminal that is installed in a shop such as a photographic store, convenience store, etc., and that records image data, etc., in a recording medium under operation by the user, a shop terminal that records image data, etc., in a recording medium under operation by a shop attendant, a digital Minilab that can print image data under operation of the user or the shop assistant, a DVD recorder (HDD recorder), a game machine, a home server, a portable writer that can recording image data, etc., in a recording medium, an (HDD) car navigation system, etc.

Further, as the reproducing equipment that reads out image data, etc., from a recording medium, although the configuration of using a PC 10 was explained above, it is not necessary to restrict to this. As the reproducing equipment that reads out image data, etc., from a recording medium, it is also possible to use a shop terminal, a digital Minilab, a DVD player, a DVD recorder (HDD recorder), a game machine, a home server, a portable writer, an (HDD) car navigation system, etc.

Further, at the time of generating new data in the form of a file, it is also possible to have a configuration of generating a unique file name and assigning it. For example, in a digital still camera, at the time of converting into a digital image file by carrying out image processing, etc., on an analog image signal input from a photographing section such as a CCD, etc., it is also possible to generate and assign a unique file name. In addition, when generating a new directory, it is also possible to have a configuration in which a unique directory name is generated by acquiring a seed from the image files that are planned to be stored in that directory.

In addition, in the above preferred embodiment and modified example, although the configuration explained was one that renames the file name of an image file, or the directory name of the directory in which that image file is stored, it is not necessary to restrict to this. For example, it is possible to have a configuration in which the file names and directory names of various types of files such as music files, etc., other than image files, and their directories are converted to unique ones. In this case, the apparatus generating unique file names or directory names is not restricted to an apparatus that records an electronic album in a recording medium, but can by any other apparatus.

Further, in the above preferred embodiment and modified example, although the configuration was one in which a unique file name or directory name was generated and was assigned to an image file or directory, it is not necessary to restrict to this. For example, in the electronic album disk 30, a disk ID for identifying each disk is recorded, and image files and directory structure are recorded in a disk with that disk ID. Regarding this disk ID (recording medium identification information), similar to the file names and directory names, it is also possible to have a configuration in which a unique code is generated from an image file recorded in that disk and is assigned to the disk ID, there by generating a unique disk ID.

Further, the above preferred embodiment and modified example are one example of a desirable information generating apparatus and information generating program according to the present invention, and it is not necessary to limit to these.

### [Applicability in the Industry]

According to the present invention, by generating a unique code from at least one of a data string within the source file and the file size, and by generating and assigning a file name including that code, it is possible to increase sufficiently the uniqueness of the file name.

Further, since a code including the time information is further generated and set at the beginning of the file name, not only that the uniqueness of the file name is further increased, but also it is possible to sort easily the file names in the order of the time information, and the user can easily identify the file name by looking at it.

Further, since a unique code is generated from at least one among a data string within at least one source file within a directory, the file size, and the number of files, and a directory name including that code is generated and assigned, it is possible to increase the uniqueness of the directory name.

Further, since a code including the time information is generated further and is set at the beginning of the directory name, not only that the uniqueness of the directory name is further increased, but also it is possible to sort easily the directory names in the order of the time information, and the user can easily identify the directory name by looking at it.

Further, since a unique code is generated from at least one among a data string within at least one source file recorded within a recording medium, the file size, and the number of files, and the recording medium identification information including that code is generated and assigned, it is possible to increase the uniqueness of the recording medium identification information.

Further, since a code including the time information is generated further and is set at the beginning of the recording medium identification information, not only that the uniqueness of the recording medium identification information is further increased, but also it is possible to sort easily the recording medium identification information in the order of the time information, and the user can easily identify the recording medium identification information by looking at it.

Further, since the acquired seed information or the generated code is processed, it is possible to increase the uniqueness of the code, and to reduce the information volume of the code.

Further, by converting the radix of the code, discarding the part with low uniqueness, it is possible to reduce the information volume, and by rearranging, and by adding a permutation, it is possible to increase the uniqueness of the code.

Further, since the code is generated by combining a plurality of acquired code information, compared to the case of using a single seed information, it is possible to further increase the uniqueness of the file name, the directory name, or the recording medium identification information.

In addition, since the code is generated and assigned without processing the part of the time information that can be verified by the user easily, it is possible for the user to verify by merely looking at unprocessed part of the file name, directory name, or the recording medium identification information.

## Claims

1. An information generating apparatus comprising:
a seed information acquiring section that acquires, from a file, as seed information at least one of a data string within the file and a file size;
a code generating section that generates a code based on the seed information acquired by said seed information acquiring section; and
a file name generating section that generates a file name including the code generated by said code generating section.

2. The information generating apparatus according to claim 1, wherein said seed information acquiring section acquires time information as seed information, and said file name generating section sets a code corresponding to the time information at the beginning of the file name.

3. An information generating apparatus comprising:
a seed information acquiring section that acquires, from at least one file stored in a directory, as seed information, at least one of a data string within the file, a file size, and a number of files;
a code generating section that generates a code based on the seed information acquired by said seed information acquiring section; and
a directory name generating section that generates a directory name including the code generated by said code generating section and assigns the directory name to the directory.

4. The information generating apparatus according to claim 3, wherein said seed information acquiring section acquires time information as seed information, and said directory name generating section sets a code corresponding to the time information at the beginning of the directory name.

5. An information generating apparatus comprising:
a seed information acquiring section that acquires, from at least one file recorded in a recording medium, as seed information, at least one of a data string within the file, a file size, and a number of files;
a code generating section that generates a code based on the seed information acquired by said seed information acquiring section;
a recording medium identification information generating section that generates a recording medium identification information including the code generated by said code generating section and assigns it to the recording medium.

6. The information generating apparatus according to claim 5, wherein said seed information acquiring section acquires time information as seed information, and said recording medium identification information generating section sets a code corresponding to the time information at the beginning of the recording medium identification information.

7. The information generating apparatus according to claim 1, further comprising a processing section that processes the acquired seed information or the generated code.

8. The information generating apparatus according to claim 7, wherein a processing by the processing section is at least one of conversion of radix, discarding a part with low uniqueness, rearranging, and addition of a permutation.

9. The information generating apparatus according to any one among claim 1 to claim 8, wherein said code generating section generates a code by combining a plurality of the acquired seed information.

10. The information generating apparatus according to claim 2, wherein said code generating section generates a code without carrying out processing on a part that can be verified by a user in the acquired time information.

11. An information generating program that realizes in a computer:
a seed information acquiring function that acquires, from a file, as seed information at least one of a data string within the file and a file size;
a code generating function that generates a code based on the seed information acquired by said seed information acquiring function; and
a file name generating function that generates a file name including the code generated by said code generating function.

12. The information generating program according to claim 11, wherein said seed information acquiring function acquires time information as seed information, and said file name generating function sets a code corresponding to the time information at the beginning of the file name.

13. An information generating program that realizes in a computer:
a seed information acquiring function that acquires, from at least one file stored in a directory, as seed information, at least one of a data string within said file, a file size, and a number of files;
a code generating function that generates a code based on the seed information acquired using said seed information acquiring function; and
a directory name generating function that generates a directory name including the code generated by said code generating function and assigns the directory name to the directory.

14. The information generating program according to claim 13, wherein said seed information acquiring function acquires time information as seed information, and said directory name generating function sets a code corresponding to the time information at the beginning of the directory name.

15. An information generating program that realizes in a computer:
a seed information acquiring function that acquires, from at least one file recorded in a recording medium, as seed information, at least one of a data string within the file, a file size, and a number of files;
a code generating function that generates a code based on the seed information acquired by said seed information acquiring function; and
a recording medium identification information generating function that generates a recording medium identification information including the code generated by said code generating function and assigns the recording medium identification information to the recording medium.

16. The information generating program according to claim 15, wherein said seed information acquiring function acquires time information as seed information, and said recording medium identification information generating function sets a code corresponding to the time information at the beginning of the recording medium identification information.

17. The information generating program according to claim 11 that realizes in a computer a processing function that processes the acquired seed information or the generated code.

18. The information generating program according to claim 17, wherein processing by the processing function is at least one of conversion of radix, discarding a part with low uniqueness, rearranging, and addition of a permutation.

19. The information generating program according to claim 11, wherein said code generating function generates a code by combining a plurality of the acquired seed information.

20. The information generating program according to claim 12, wherein said code generating function generates a code without carrying out processing on a part that can be verified by a user in the acquired time information.
